# EUROPEAN PATENT APPLICATION

(11) **EP 4 807 554 A1**
(43) Date of publication of application: **16.09.2026**
(21) Application number: 26152040.7
(22) Date of filing: 15.01.2026
(51) Int. Cl.: G06F 9/50, G06F 9/54, G06F 21/53, G06F 21/74

(54) **PARALLELIZING SECURE MONITOR CALLS IN AN ARM ARCHITECTURE**

(30) Priority: 14.03.2025 US 202519079963
(71) Applicant: GOOGLE LLC, Mountain View CA 94043 (US)
(72) Inventor: Lakra, Nitin, Mountain View, 94043 (US)
(74) Representative: Marks & Clerk GST

(57) **Abstract**

The present disclosure describes various aspects of implementing parallelizing secure monitor calls in an Arm architecture. In some aspects, an apparatus receives, from an application in a non-secure zone of the computing system, a Secure Monitor Call (SMC) requesting use of one or more trusted resources in a secure zone of the computing system. The apparatus enqueueing the SMC as an entry in a receive (RX) queue and evaluates SMC call information to schedule the SMC call for execution using the one or more trusted resources in the secure zone. Based on the execution of the SMC call, a scheduler receives a response to the scheduled SMC call. The apparatus enqueues the response to the SMC call in a transmit (TX) queue and sends a notification, to the application, indicating that the response to the SMC call is in the TX queue.

## Description

### BACKGROUND

With increasing demands for security in computing devices, there is a greater need to access secure resources in computing devices by client applications. The Arm^{®} TrustZone^{®} communication model, in processors implemented using an Arm^{®} architecture, is based on serial access to secure resources using Secure Monitor Calls (SMCs). The inherent sequential nature of the SMCs results in performance bottlenecks. Each SMC requires stack restoration, enforcing a one-at-a-time processing model. This serialization hinders responsiveness, especially in scenarios with frequent Arm^{®} TrustZone^{®} interactions.

### SUMMARY

In aspects, methods, devices, systems, and means for parallelizing secure monitor calls in an Arm architecture are described in which an apparatus receives, from an application in a non-secure zone of a computing system, a Secure Monitor Call (SMC) requesting use of one or more trusted resources in the secure zone. The apparatus enqueues the SMC as an entry in a receive (RX) queue and evaluates SMC call information included in the enqueued entry. Based on the evaluated SMC call information included in the enqueued entry, a scheduler schedules the SMC call for execution using the one or more trusted resources in the secure zone. Based on the execution of the SMC call, the scheduler receives a response to the scheduled SMC call. The apparatus enqueues the response to the SMC call in a transmit (TX) queue and sends a notification, to the application, which indicates that the response to the SMC call is in the TX queue.

The details of one or more implementations of parallelizing secure monitor calls in an Arm architecture are set forth in the accompanying drawings and the following description. Other features and advantages will be apparent from the description and drawings, and from the claims. This summary is provided to introduce subject matter that is further described in the Detailed Description and Drawings. Accordingly, this summary is not intended to identify essential features of the claimed subject matter, nor is it intended for use in determining the scope of the claimed subject matter.

### BRIEF DESCRIPTION OF THE DRAWINGS

This disclosure describes apparatuses of and techniques for implementing parallelizing secure monitor calls in an Arm architecture with reference to the following drawings. The use of same or similar reference numbers throughout the description and the figures may indicate like features or components:
FIG. 1 illustrates an example operating environment that includes user devices in which aspects of parallelizing secure monitor calls in an Arm architecture can be implemented;
FIG. 2 illustrates an example system environment in which parallelizing secure monitor calls in an Arm architecture can be implemented in accordance with one or more aspects;
FIG. 3 illustrates an example system environment in which parallelizing secure monitor calls in an Arm architecture can be implemented in accordance with one or more aspects;
FIG. 4 illustrates an example system environment in which parallelizing secure monitor calls in an Arm architecture can be implemented in accordance with one or more aspects;
FIG. 5 illustrates an example method for parallelizing secure monitor calls in an Arm architecture in accordance with one or more aspects; and
FIG. 6 illustrates an example system-on-chip (SoC) environment in which aspects of parallelizing secure monitor calls in an Arm architecture may be implemented.

### DETAILED DESCRIPTION

The current TrustZone communication architecture in Arm processors relies on a serialized Secure Monitor Call (SMC) mechanism between a normal or unsecured zone (Normal world) and a secure zone (Secure world) of the Arm architecture. This inherently sequential approach can create bottlenecks when multiple processes or threads attempt to concurrently interact with the TrustZone. The limitations stem from the need for stack restoration after each SMC call, which necessitates a strict one-at-a-time processing model.

For example, consider a scenario where a mobile device is simultaneously handling a secure payment transaction, a biometric authentication request, and a secure boot process. In the current architecture, these operations would be serialized, leading to potential delays and a degraded user experience.

In aspects, to overcome the performance limitations of the serialization of SMCs, a receive (RX) queue and a transmit (TX) queue are added to the Arm architecture to decouple the SMC call handling from processes and/or threads in a non-secure zone of a System-on-Chip (SoC) from the TrustZone execution context in a secure zone of the SoC. This enables multiple SMC calls to be buffered in the queues and processed in parallel for the calling processes and/or threads independently from the availability of trusted resources in the TrustZone, thereby improving the throughput and responsiveness of TrustZone interactions for the calling processes and/or threads.

In other aspects, a scheduler manages the processing of queued SMC calls. The scheduler can prioritize requests based on factors like criticality, source, and resource requirements. The scheduler can distribute the processing of SMC calls across available trusted resources (e.g., CPU cores in the Secure zone) to ensure efficient utilization and prevent overload.

Returning to the example, with the addition of the receive and transmit queues, each of the operations on the mobile device can trigger an SMC call that is immediately placed in the RX queue. The scheduler schedules the process calls to the secure zone that can independently process these calls, leveraging the parallel execution capabilities of modern processors, without being constrained by the sequential nature of individual SMC calls.

### Example Environment

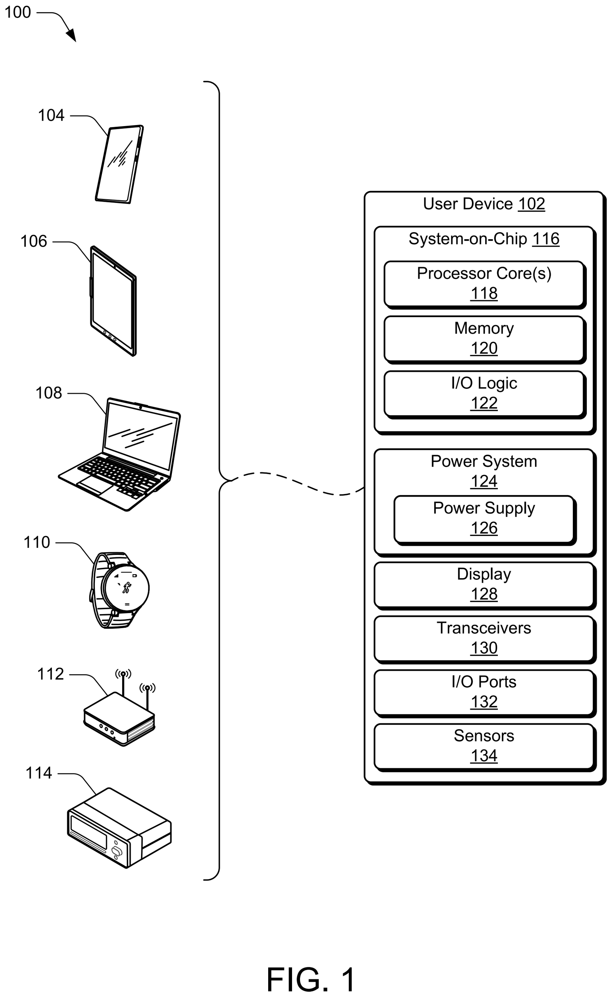

FIG. 1 illustrates an example environment 100 that includes a user device 102 in which aspects of parallelizing secure monitor calls in an Arm architecture can be implemented. The user device 102 may be implemented as any suitable device, some of which are illustrated as a smart-phone 104, a tablet computer 106, a laptop computer 108, a wearable computing device 110 (e.g., smart-watch), a broadband router 112 (e.g., mobile hotspot), and automotive computing system 114 (e.g., navigation and entertainment system). Although not shown, the user device 102 may also be implemented as any of a mobile station (e.g., fixed- or mobile-STA), a mobile communication device, a client device, a user equipment, a mobile phone, an entertainment device, a gaming device, a mobile gaming console, a personal media device, a media playback device, a health monitoring device, a drone, a camera, a wearable smart-device, an Internet home appliance capable of wireless Internet access and browsing, an IoT device, and/or other types of user devices. The user device 102 may provide other functions or include components or interfaces omitted from FIG. 1 for the sake of clarity or visual brevity.

In this example, some components of the user device 102 are implemented as a system-on-chip 116 (SoC 116), although these components may be implemented separately or in other configurations (e.g., integrated circuits or systems). As shown in FIG. 1, the SoC 116 includes one or more processor cores 118 and memory 120, which may include computer-readable media, memory media, and/or storage media. The processor core(s) 118 may be implemented as a general-purpose processor core (e.g., of a multicore central-processing unit (CPU) or application processor (AP)), an application-specific integrated circuit (ASIC), graphics processing unit (GPU), or a processor core with other components of the user device 102 integrated therewith. The memory 120 can include any suitable type of computer-readable media, memory media, and/or storage media. For example, the memory 120 may include read-only memory (ROM), programmable ROM (PROM), random access memory (RAM), dynamic RAM (DRAM), static RAM (SRAM), or Flash memory. In the context of this disclosure, the memory 120 of the user device 102 is implemented as a hardware-based or physical storage device, which does not include transitory signals or carrier waves. Applications, firmware, and/or an operating system (not shown) of the user device 102 can be embodied on the memory 120 as processor-executable instructions, which the processor core 118 may execute to provide various functionalities of the user device 102. The memory 120 may also store device data, such as user data or user media that is accessible by the applications, firmware, or operating system of the user device 102.

In this example, the SoC 116 also includes instances of input/output logic 122 (I/O logic 122). The I/O logic 122 may include circuitry configured to interface control logic of the processor core 118 with various analog and/or digital I/O circuits of the user device 102. For example, the I/O logic 122 can enable the processor core 118 or other control logic to interface with sensors, data ports, transceivers, or other components of the user device 102. In various implementations, respective circuitry of the processor core 118, memory 120, and I/O logic 122 may operate at different voltages provided by a power system 124 of the user device 102 that includes a power supply 126.

In aspects, the power system 124 includes one or more power supplies 126, which provide regulated power to the components of the user device 102 and/or the SoC 116. In various implementations, a user device 102 may include or be configured with a display 128, transceivers 130, I/O ports 132, or sensors 134, which can receive power from the power supplies 126 of the power system 124. The power supplies 126 of the power system 124 may include any suitable type of power supply, such as linear regulators, switch-mode power supplies, multiphase switching regulators, or the like. In some cases, the power supplies 126 are configured to provide power at different respective voltage levels for the various components of the user device 102. For example, one of the power supplies 126 may include a switching regulator configured to step battery power (e.g., 3.7 to 4.2 V) or external power (e.g., 5.0 V) down to power at a voltage (e.g., 1.2 V) at which the I/O logic 122 is configured to operate.

The display 128, transceivers 130, I/O ports 132 and/or sensors 134 of the user device 102 may be configured in any suitable fashion and can be operably coupled with the I/O logic 122. For example, the display 128 may be coupled with the processor core 118 or another processor of the SoC 116 (e.g., graphics processing unit (GPU), not shown) and configured to graphically present an operating system or applications of the user device 102. The transceivers 130 enable the user device 102 to communicate data (e.g., device data) over wired or wireless networks according to any suitable communication protocol. The I/O ports 132 of the user device 102 may include USB ports, coaxial cable ports, and other serial or parallel connectors (including internal connectors) useful to couple the user device to various components, peripherals, or accessories such as keyboards, microphones, or cameras. Alternatively or additionally, the sensors 134 can enable the user device 102 to sense various properties, variances, stimuli, or characteristics of an environment in which the user device 102 operates. For example, the sensors 134 may include a motion sensor, an ambient light sensor, an acoustic sensor, a capacitive sensor, an infrared sensor, a temperature sensor, a radar sensor, or a magnetometer.

### Parallelized Secure Zone Architecture

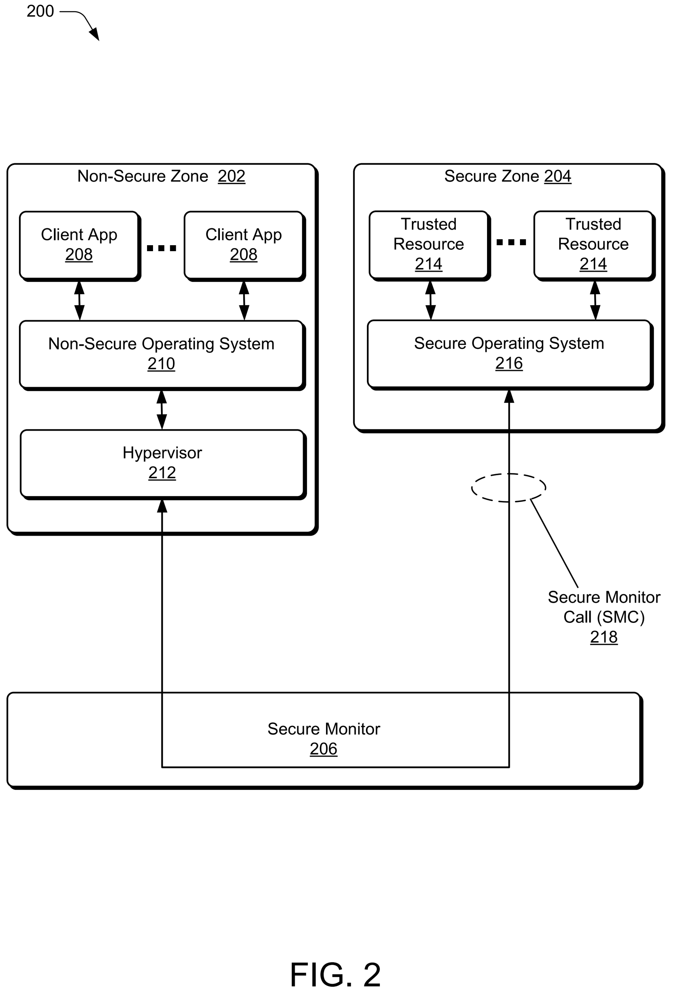

FIG. 2 illustrates, at 200, an example of a system in which aspects of parallelizing secure monitor calls in an Arm architecture can be implemented. The system 200 includes a non-secure zone 202 (e.g., a normal world 202), a secure zone 204 (e.g., a Secure world 204), and a secure monitor 206. The non-secure zone 202 includes one or more client applications 208 (client apps 208), a non-secure operating system (OS) 210, and a hypervisor 212. The client applications 208 may run on a single processor core or be distributed across multiple processor cores or virtual machines. The non-secure operating system 210 provides support to the client applications 208 for operations that do not require trusted/secure operations. The hypervisor 212 runs directly on the computing hardware and has full control of the hardware platform and all its resources, including processor core(s) 118 and physical memory 120.

The secure zone 204 includes one or more trusted resources 214 (trusted applications 214) that run on top of a secure operating system 216. The trusted resources 214 include secure functions such as an encryption engine, secure storage, a random number generator, and the like. In a conventional Arm architecture, when a client application 208 requires access to a trusted resource 214, the application makes a call through the non-secure operating system 210 and the hypervisor 212 that sends an SMC 218 from the hypervisor 212, through the secure monitor 206 to a trusted resource 214. The use of the SMC 218 is a serial operation that causes processes or threads executing in the non-secure zone 202 to block if another process or thread has already made an SMC 218.

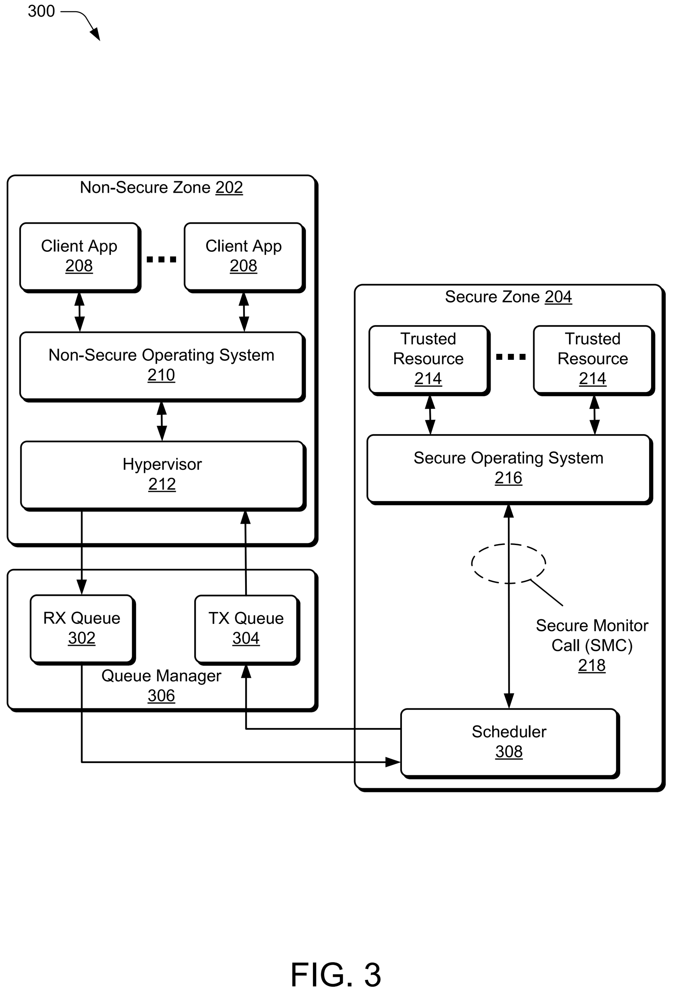

FIG. 3 illustrates, at 300, an example of a system with which aspects of parallelizing secure monitor calls in an Arm architecture can be implemented. To improve performance in utilizing the resources of the secure zone 204, the system 200 includes a receive queue 302 (RX queue 302), a transmit queue 304 (TX queue 304), a queue manager 306, and a scheduler 308. The initial control for granting access to these queues resides with the hypervisor 212, given its enhanced trustworthiness compared to the virtual machines and and/or client applications 208 running above it. The hypervisor 212 sends SMCs to the queue manager 306 that enqueues the SMCs in the RX queue 302 that buffers the SMCs for access to trusted resources 214 in the secure zone 204. The results from completed SMCs are sent to the queue manager 306, which enqueues the results in the TX queue 304. The queue manager 306 sends an interrupt to the process or thread that sent the respective SMC to the RX queue 302 when a result is available in the TX queue 304. The RX queue 302 and the TX queue 304 can be implemented in any suitable manner, such as circular queue in a hardware component or a software component in shared memory that is shared between the non-secure zone 202 and the secure zone 204 (as discussed in detail below).

The scheduler 308 manages the processing of queued SMCs. The scheduler 308 prioritizes requests based on factors like criticality, the source of the request, and resource requirements. The scheduler 308 distributes the processing of SMCs across available secure zone 204 resources (e.g., CPU cores in the secure zone 204) to ensure efficient utilization of secure zone 204 resources and prevent overload. Although the scheduler 308 is illustrated as being included in the secure zone 204, the scheduler 308 can be included in the non-secure zone 202.

The scheduler 308 can use any suitable scheduling algorithm, such as priority-based scheduling that prioritizes SMCs calls based on criticality levels, First-Come, First-Served (FCFS) scheduling that processes SMCs in the order they arrive, Round-Robin scheduling that cycles through SMCs, ensuring fair processing, Weighted Fair Queuing (WFQ) scheduling that allocates resources proportionally based on weights assigned to different SMC types, or any combination thereof. The scheduler 308 can use any suitable load balancing strategy, such as least-connections load balancing that assigns calls to the core with the fewest active requests, round-robin load balancing that distributes calls sequentially across cores, or weighted load balancing that assigns calls based on core processing capacity, or any combination thereof.

The scheduler 308 can identify "blocker" calls that might hold resources for extended periods of time. The scheduler 308 can mitigate the impact of blocker calls using: timeouts to interrupt long-running calls to prevent indefinite blocking, preemption to allow higher-priority calls to preempt lower-priority ones, resource reservation to reserve dedicated resources for specific call types to prevent contention, or any combination thereof.

### Hardware-based Queues and Scheduler

In a first alternative aspect, dedicated hardware queues for the RX queue 302, the TX queue 304, the queue manager 306, and a hardware unit responsible for scheduling and load balancing of the scheduler 308 are integrated into the system architecture of an SoC. The integration of these functions into hardware units provides optimal throughput and lower latency (as compared to a software-based implementation). The integration of these functions enhances security by isolating the functions in hardware, as opposed to software, and minimizes software involvement in queue and scheduling management. In this first aspect, the hypervisor 212 manages initialization, configuration, interrupt handling, and configuration of the hardware-based scheduler 308.

In aspects, the RX queue 302 and the TX queue 304 are implemented as circular buffers, but any other suitable queueing mechanism can also be used. Each entry in the queues includes SMC call information, including a function ID, one or more parameters, a caller ID, and a priority level of the SMC. Client applications 208 in the non-secure zone 202 write SMC call information to the queue manager 306 that enqueues the SMC call information in the RX queue 302.

In this aspect, the scheduler 308 is included in the secure zone 204. The hardware scheduler 308 polls, using the queue manager 306, the RX queue 302 for pending SMCs, dequeues the SMCs, and prioritizes SMCs based on predefined rules (e.g., real-time requests, security-critical operations, and the like). The load balancer in the scheduler 308 distributes prioritized calls to available secure zone trusted resources 214 that can be executing on a single or multiple CPU cores. After processing, the scheduler 308 sends the responses to the queue manager 306 that enqueues the responses to the SMCs in the TX queue 304. Queue status information and indications of processing completion of SMCs are communicated between the hardware blocks using hardware interrupts.

### Software-based Queues and Scheduler

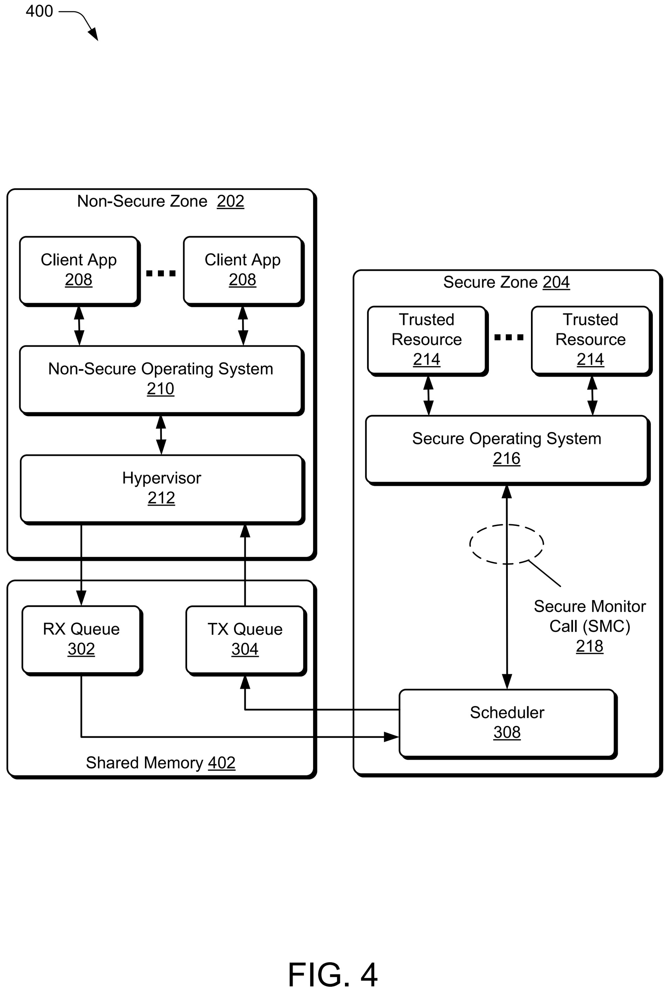

FIG. 4 illustrates, at 400, an example of a system with software-based queues and scheduler in which aspects of parallelizing secure monitor calls in an Arm architecture can be implemented. In a second alternative aspect, the RX queue 302 and the TX queue 304 are implemented in software, utilizing a shared memory region 402 between the non-secure zone 202 and the secure zone 204 that are accessible by both the non-secure zone 202 and the secure zone 204. The hypervisor 212 manages access permissions to the shared memory 402. Software routines manage for enqueueing and dequeuing operations of the RX queue 302 and the TX queue 304 and are included in the hypervisor 212. The scheduler 308 is a software scheduler included in the secure zone 204 that handles prioritization-based scheduling and load balancing. The scheduler 308 periodically checks the RX queue 302 for pending SMCs.

In aspects, the RX queue 302 and the TX queue 304 are implemented as circular buffers, but any other suitable queueing mechanism can also be used. Each entry in the queues includes SMC call information, including a function ID, one or more parameters, a caller ID, and a priority level of the SMC. The hypervisor 212 mediates access to the shared memory region, ensuring secure and synchronized queue operations. The software-based approach to queueing and scheduling enables dynamic changes to strategies for managing queue size, scheduling, and load balancing. The scheduler 308 dequeues the SMCs, and prioritizes SMCs based on predefined rules (e.g., real-time requests, security-critical operations, and the like). The load balancer in the scheduler 308 distributes prioritized calls to available secure zone trusted resources 214 that can be executing on a single or multiple CPU cores. After processing, the scheduler 308 enqueues responses to the SMCs in the TX queue 304. Queue status information and indications of processing completion of SMCs are communicated between the secure zone 204 and the non-secure zone 202 using inter-processor interrupts (IPIs) or shared memory flags.

### Example Method

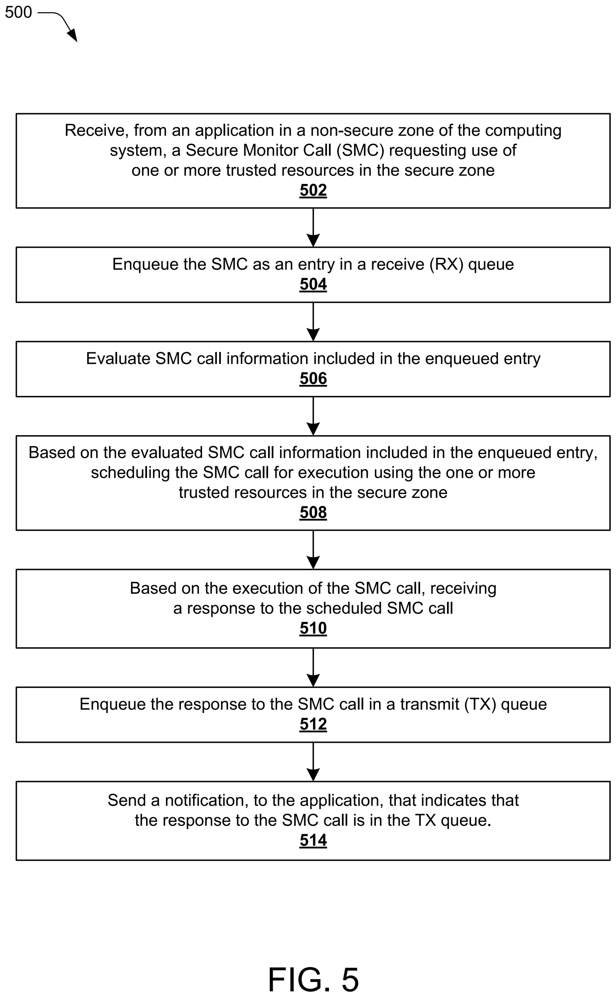

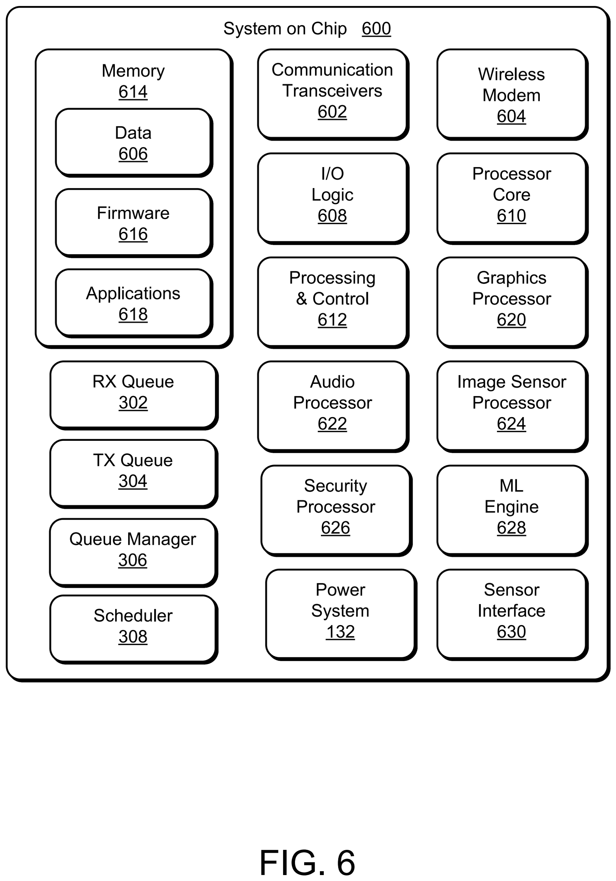

Example method 500 is described with reference to FIG. 5, in accordance with one or more aspects of implementing parallelizing secure monitor calls in an Arm architecture. Generally, the method 500 illustrates sets of operations (or acts) that may be performed in, but not necessarily limited to, the order or combinations in which the operations are shown herein. Further, any of one or more of the operations may be repeated, combined, reorganized, skipped, or linked to provide a wide array of additional and/or alternate methods. In portions of the following discussion, reference may be made to the environment 100 of FIG. 1, components of FIGs. 2-4, a system of FIG. 6, and/or entities detailed in FIG. 1 or other figures, reference to which is made for example only. The techniques and apparatuses described in this disclosure are not limited to an embodiment or performance by one entity or multiple entities operating on one device or those described with reference to the figures.

FIG. 5 illustrates an example method 500 for scheduling trusted resources in a secure zone of a computing system in accordance with one or more aspects, including operations performed with an apparatus that includes the RX queue 302, the TX queue 304, and/or the scheduler 308. At 502, a Secure Monitor Call (SMC) requesting the use of one or more trusted resources in the secure zone is received from an application in a non-secure zone of the computing system. For example, queue manager hardware (e.g., the queue manager 306) of the apparatus receives an SMC (e.g., the SMC 218) requesting the use of one or more trusted resources (e.g., trusted resources 214) in the secure zone (e.g., the secure zone 214) is received from an application (e.g., a client app 208) in a non-secure zone of the computing system.

At 504, the queue manager enqueues the SMC as an entry in a receive (RX) queue. For example, the queue manager enqueues the SMC as an entry in an RX queue (e.g., the RX queue 302).

At 506, a scheduler evaluates SMC call information included in the enqueued entry. For example, a scheduler (e.g., the scheduler 308) evaluates SMC call information included in the enqueued entry, such as a function ID, one or more parameters, a caller ID, and a priority level of the SMC.

At 508, based on the evaluated SMC call information included in the enqueued entry, the scheduler schedules the SMC call for execution using the one or more trusted resources in the secure zone. For example, based on the evaluated SMC call information included in the enqueued entry, the scheduler schedules the SMC call for execution using the one or more trusted resources in the secure zone using based on priority levels included in the SMC call information, using First-Come, First-Served (FCFS) scheduling, using Round-Robin scheduling, using Weighted Fair Queuing (WFQ) scheduling, or any combination thereof.

At 510, based on the execution of the SMC call, receives a response to the scheduled SMC call. At 512, the scheduler enqueues the response to the SMC call in a transmit (TX) queue. For example, the scheduler enqueues the response to the SMC call in a transmit (TX) queue (e.g., the TX queue 304).

At 514, the queue manager sends a notification, to the application, which indicates that the response to the SMC call is in the TX queue. For example, the queue manager of the apparatus sends a notification, to the application that called sent the SMC, which indicates that the response to the SMC call is in the TX queue. The indication may be communicated by an inter-processor interrupt or a shared memory flag.

### Example Systems

FIG. 6 illustrates an example system-on-chip (SoC) in which aspects of parallelizing secure monitor calls in an Arm architecture can be implemented. In aspects, the SoC 600 may represent similar or alternate configurations of the SoC 116 as described with reference to FIG. 1. Accordingly, the SoC 600 may be embodied as or within any type of user device 102, user equipment, apparatus, other device, or system as described with reference to FIGs. 1-5. Although described with reference to chip-based packaging, the components shown in FIG. 6 may be embodied as other systems or component configurations, such as, and without limitation, a power management integrated-circuit (PMIC), a power regulation circuit, an LDO integrated-circuit, a Field-Programmable Gate Array (FPGA), an Application-Specific Integrated Circuit (ASIC), an Application-Specific Standard Product (ASSP), a digital signal processor (DSP), Complex Programmable Logic Devices (CPLD), system in package (SiP), package on package (PoP), a graphics processing unit (GPU), a machine-learning engine, processing and communication chip set, communication co-processor, sensor co-processor, or the like.

In this example, the SoC 600 includes communication transceivers 602 and a wireless modem 604 that enable wired or wireless communication of data 606 (e.g., received data, data that is being received, data scheduled for broadcast, packetized, or the like). In some aspects, the wireless modem 604 is implemented as a multi-mode multi-band modem or baseband processor that is configurable to communicate in accordance with various communication protocols and/or in different frequency bands. The wireless modem 604 may include a transceiver interface (not shown) for communicating encoded or modulated signals with transceiver circuitry, and/or controlling a radio frequency (RF) front end.

The data 606 or other system content can include configuration settings of the system or various components, media content stored by the system, and/or information associated with a user of the system. Media content stored on the system-on-chip 600 may include any type of audio, video, and/or image data. The system-on-chip 600 also includes an instance of I/O logic 608, which may be configured similar to I/O logic 122 as described throughout this disclosure. In some implementations, the I/O logic 608 of the SoC 600 is configured as one or more data inputs 608 via which any type of data, media content, and/or inputs can be received, such as user input, user-selectable inputs (explicit or implicit), or any other type of audio, video, and/or image data received from a content and/or data source. Alternatively or additionally, the I/O logic 608 may include various data interfaces, which can be implemented as any one or more of a serial and/or parallel interface, a wireless interface, a network interface, and as any other type of communication interface enabling communication with other devices or systems.

The system-on-chip 600 includes one or more processor cores 610, which process various computer-executable instructions to control the operation of the system-on-chip 600 and to enable any suitable functionalities of the system-on-chip 600. Alternatively or additionally, the system-on-chip 600 can be implemented with any one or combination of hardware, firmware, or fixed logic circuitry that is implemented in connection with processing and control circuits, which are generally shown at 612. Although not shown, the system-on-chip 600 may also include a bus, interconnect, crossbar, or fabric that couples the various components within the system.

The system 600 also includes a memory 614 (e.g., computer-readable media), such as one or more memory circuits that enable persistent and/or non-transitory data storage, and thus do not include transitory signals or carrier waves. Examples of the memory 614 include ROM, RAM, DRAM, SRAM, or Flash memory. The memory 614 provides data storage for the system data 606, as well as for firmware 616, applications 618, and any other types of information and/or data related to operational aspects of the system-on-chip 600. For example, the firmware 616 can be maintained as processor-executable instructions of an operating system (e.g., real-time OS) within the memory 614 and executed on one or more of the processor cores 610.

The applications 618 may include a system manager, such as any form of a control application, software application, signal-processing and control module, code that is native to a particular system, an abstraction module, a machine learning module, or gesture module and so on. The memory 614 may also store system components or utilities for implementing any suitable functionalities of the system-on-chip 600. In some aspects, the system-on-chip 600 also includes additional processors or co-processors to enable other functionalities, such as a graphics processor 620, audio processor 622, and image sensor processor 624. The graphics processor 620 may render graphical content associated with a user interface, operating system, or applications of the system-on-chip 600. In some cases, the audio processor 622 encodes or decodes audio data and signals, such as audio signals and information associated with voice calls or encoded audio data for playback. The image sensor processor 624 may be coupled to an image sensor and provide image data processing, video capture, and other visual media conditioning and processing functions. The system-on-chip 600 may also include the RX queue 302, the TX queue 304, the queue manager 306, and the scheduler 308.

In aspects, the system-on-chip 600 includes a power system 124, which may be implemented as described with reference to FIGs. 1-5. Alternatively or additionally, the processor cores 610 or other lower-voltage circuitry of the SoC 600 can be coupled to an output node or rail of the power system 128.

The system-on-chip 600 may also include a security processor 626 to support various security, encryption, and cryptographic operations, such as to provide secure communication protocols and encrypted data storage. Although not shown, the security processor 626 may include one or more cryptographic engines, cipher libraries, hashing modules, or random number generators to support encryption and cryptographic processing of information or communications of the system-on-chip 600. Alternatively or additionally, the system-on-chip 600 can include a machine learning (ML) engine 628 and/or a sensor interface 630. Generally, the ML engine 628 may include one or more ML models, artificial intelligence (AI) models, or deep neural networks (DNNs) and a processor core for executing the models and/or networks. The sensor interface 630 can enable the system-on-chip 600 to receive data from various sensors, such as capacitance and motion sensors of a user device in which the system-on-chip is embodied.

Generally, the components, modules, methods, and operations described herein can be implemented using software, firmware, hardware (e.g., fixed logic circuitry), manual processing, or any combination thereof. Some operations of the example methods may be described in the general context of executable instructions stored on computer-readable storage memory that is local and/or remote to a computer processing system, and implementations can include software applications, programs, functions, and the like. Alternatively, or in addition, any of the functionality described herein can be performed, at least in part, by one or more hardware logic components, such as, and without limitation, LDOs, PMICs, FPGAs, ASICs, ASSPs, SoCs, CPLDs, GPUs, ML engines, co-processors, context hubs, motion co-processors, sensor co-processors, or the like.

Although aspects of parallelizing secure monitor calls in an Arm architecture have been described in language specific to features and/or methods, the subject of the appended claims is not necessarily limited to the specific features or methods described. Rather, the specific features and methods are disclosed as example implementations of parallelizing secure monitor calls in an Arm architecture and other equivalent features and methods are intended to be within the scope of the appended claims. Further, various different aspects are described, and it is to be appreciated that each described aspect can be implemented independently or in connection with one or more other described aspects.

Some examples are described below:
Example 1. A method of scheduling trusted resources in a secure zone of a computing system, the method comprising:
   receiving, from an application in a non-secure zone of the computing system, a Secure Monitor Call (SMC) requesting use of one or more trusted resources in the secure zone;
   enqueueing the SMC as an entry in a receive (RX) queue;
   evaluating SMC call information included in the enqueued entry;
   based on the evaluated SMC call information included in the enqueued entry, scheduling the SMC call for execution using the one or more trusted resources in the secure zone;
   based on the execution of the SMC call, receiving a response to the scheduled SMC call;
   enqueueing the response to the SMC call in a transmit (TX) queue; and
   sending a notification, to the application, that indicates that the response to the SMC call is in the TX queue.
Example 2. The method of example 1, further comprising:
   receiving additional SMCs from applications in the non-secure zone;
   enqueueing the additional SMCs as additional entries in the RX queue;
   evaluating SMC call information included in the additional enqueued entries; and
   scheduling the execution of the additional SMCs.
Example 3. The method of example 2, wherein the scheduling of the execution of the additional SMCs comprises scheduling the additional SMCs:
   based on priority levels included in the SMC call information;
   using First-Come, First-Served (FCFS) scheduling;
   using Round-Robin scheduling;
   using Weighted Fair Queuing (WFQ) scheduling; or
   any combination thereof.
Example 4. The method of example 2 or 3, wherein the scheduling of the execution of the additional SMCs further comprises:
   load balancing execution of the additional SMCs across the trusted resources in the secure zone.
Example 5. The method of example 4, wherein the load balancing of the execution of the additional SMCs comprises load balancing the additional SMCs using:
   least-connections load balancing;
   round-robin load balancing;
   weighted load balancing; or
   any combination thereof.
Example 6. The method of any one of example 2 to 5, wherein the scheduling of the execution of the additional SMCs further comprises avoiding blocking by:
   using timeouts to interrupt long-running calls;
   preempting lower-priority SMCs to allow higher-priority SMCs to execute;
   using resource reservation to reserve dedicated resources for specific SMC types to prevent contention; or
   any combination thereof.
Example 7. The method of any preceding example, wherein the RX queue is a dedicated hardware queue integrated into the hardware of the computing system; wherein the TX queue is a dedicated hardware queue integrated into the hardware of the computing system; wherein the computing system includes a queue manager hardware unit responsible for managing queue operations; and wherein the secure zone the computing system includes a hardware unit responsible for scheduling and load balancing;
Example 8. The method of any one of examples 1 to 6, wherein the RX queue is a software queue included in a shared memory accessible from the secure zone and a non-secure zone of the computing system; wherein the TX queue is a software queue included in a shared memory accessible from the secure zone and a non-secure zone of the computing system; wherein a hypervisor manages access permissions to the shared memory; and wherein a software scheduler included in the secure zone performs scheduling and load balancing.
Example 9. The method of any preceding example, wherein the RX queue is a circular queue; and wherein the TX queue is a circular queue.
Example 10. The method of any preceding example, wherein the notification that indicates that the response to the SMC call is in the TX queue comprises:
   an inter-processor interrupt; or
   a shared memory flag.
Example 11. An apparatus for scheduling trusted resource in a secure zone of a computing system, the apparatus comprising:
   a hardware receive (RX) queue;
   a hardware transmit (TX) queue;
   a hardware queue manager; and
   a hardware scheduler;
   the apparatus configured to:
      receive, by the queue manager and from an application in a non-secure zone of the computing system, a Secure Monitor Call (SMC) requesting use of one or more trusted resources in the secure zone;
      enqueue, by the queue manager, the SMC as an entry in a RX queue;
      dequeue the entry;
      evaluate, by the scheduler, SMC call information included in the dequeued entry;
      based on the evaluated SMC call information included in the enqueued entry, schedule, by the scheduler, the SMC call for execution using the one or more trusted resources in the secure zone;
      based on the execution of the SMC call, receive, by the scheduler, a response to the scheduled SMC call;
      enqueue, by the queue manager, the response to the SMC call in the TX queue; and
      send a notification, from the queue manager and to the application, that indicates that the response to the SMC call is in the TX queue.
Example 12. The apparatus of example 11, the apparatus further configured to:
   receive additional SMCs from applications in the non-secure zone;
   enqueue, by the queue manager, the additional SMCs as additional entries in the RX queue;
   dequeue the additional entries;
   evaluate, by the scheduler, SMC call information included in the additional dequeued entries; and
   schedule the execution of the additional SMCs.
Example 13. The apparatus of example 12, wherein the scheduler is configured to schedule the execution of the additional SMCs:
   based on priority levels included in the SMC call information;
   using First-Come, First-Served (FCFS) scheduling;
   using Round-Robin scheduling;
   using Weighted Fair Queuing (WFQ) scheduling; or
   any combination thereof.
Example 14. The apparatus of example 12 or 13, wherein the scheduler is configured to:
   load balance execution of the additional SMCs across the trusted resource in the secure zone; and
   wherein the scheduler is configured to load balance the execution of the additional SMCs using:
      least-connections load balancing;
      round-robin load balancing;
      weighted load balancing; or
      any combination thereof.
Example 15. The apparatus of any one of examples 12 to 14, wherein the queue manager is configured to:
   send the notification, to the application, that indicates that the response to the SMC call is in the TX queue using an inter-processor interrupt or a shared memory flag.
Example 16. The apparatus of any one of examples 11 to 15, wherein the scheduler included in secure zone of the computing system.
Example 17. An apparatus for scheduling trusted resources in a secure zone of a computing system, the apparatus comprising:
   a shared memory, the shared memory accessible from the secure zone and a non-secure zone of the computing system;
   a first processor in the non-secure zone;
   a second processor in the secure zone;
   a first memory in the non-secure zone comprising instructions executable by the first processor to:
      receive, from an application in a non-secure zone of the computing system, a Secure Monitor Call (SMC) requesting use of one or more trusted resources in the secure zone;
      enqueue the SMC as an entry in a receive (RX) queue included in the shared memory;
      a second memory in the secure zone comprising instructions executable by the second processor to:
         dequeue the entry from the RX queue;
         evaluate SMC call information included in the dequeued entry;
         based on the evaluated SMC call information included in the enqueued entry, schedule the SMC call for execution using the one or more trusted resources in the secure zone;
         based on the execution of the SMC call, receive, by the scheduler, a response to the scheduled SMC call;
         enqueue the response to the SMC call in a transmit (TX) queue included in the shared memory; and
         the instructions in the first memory executable by the first processor to:
            send a notification, to the application, that indicates that the response to the SMC call is in the TX queue.
Example 18. The apparatus of example 17, wherein the instructions in the first memory are executable by the first processor to:
   receive additional SMCs from applications in the non-secure zone;
   enqueue the additional SMCs as additional entries in the RX queue;
   wherein the instructions in the second memory are executable by the second processor to:
      dequeue the additional entries, by the scheduler;
      evaluate SMC call information included in the additional dequeued entries; and
      schedule the execution of the additional SMCs.
Example 19. The apparatus of example 18, wherein:
   the instructions to schedule the execution of the additional SMCs are executable to schedule the execution of the additional SMCs:
   based on priority levels included in the SMC call information;
   using First-Come, First-Served (FCFS) scheduling;
   using Round-Robin scheduling;
   using Weighted Fair Queuing (WFQ) scheduling; or
   any combination thereof;
Example 20. The apparatus of example 18 or 19, wherein the instructions to schedule the execution of the additional SMCs are executable to load balance execution of the additional SMCs across the trusted resources in the secure zone using:
   least-connections load balancing;
   round-robin load balancing;
   weighted load balancing; or
   any combination thereof.

## Claims

1. A method of scheduling trusted resources in a secure zone of a computing system, the method comprising:
receiving, from an application in a non-secure zone of the computing system, a Secure Monitor Call (SMC) requesting use of one or more trusted resources in the secure zone;
enqueueing the SMC as an entry in a receive (RX) queue;
evaluating SMC call information included in the enqueued entry;
based on the evaluated SMC call information included in the enqueued entry, scheduling the SMC call for execution using the one or more trusted resources in the secure zone;
based on the execution of the SMC call, receiving a response to the scheduled SMC call;
enqueueing the response to the SMC call in a transmit (TX) queue; and
sending a notification, to the application, that indicates that the response to the SMC call is in the TX queue.

2. The method of claim 1, further comprising:
receiving additional SMCs from applications in the non-secure zone;
enqueueing the additional SMCs as additional entries in the RX queue;
evaluating SMC call information included in the additional enqueued entries; and
scheduling the execution of the additional SMCs.

3. The method of claim 2, wherein the scheduling of the execution of the additional SMCs comprises scheduling the additional SMCs:
based on priority levels included in the SMC call information;
using First-Come, First-Served (FCFS) scheduling;
using Round-Robin scheduling;
using Weighted Fair Queuing (WFQ) scheduling; or
any combination thereof.

4. The method of claim 2 or 3, wherein the scheduling of the execution of the additional SMCs further comprises:
load balancing execution of the additional SMCs across the trusted resources in the secure zone; and optionally:
wherein the load balancing of the execution of the additional SMCs comprises load balancing the additional SMCs using:
least-connections load balancing;
round-robin load balancing;
weighted load balancing; or
any combination thereof.

5. The method of any one of claims 2 to 4, wherein the scheduling of the execution of the additional SMCs further comprises avoiding blocking by:
using timeouts to interrupt long-running calls;
preempting lower-priority SMCs to allow higher-priority SMCs to execute;
using resource reservation to reserve dedicated resources for specific SMC types to prevent contention; or
any combination thereof.

6. The method of any preceding claim, wherein:
a) the RX queue is a dedicated hardware queue integrated into the hardware of the computing system; wherein the TX queue is a dedicated hardware queue integrated into the hardware of the computing system; wherein the computing system includes a queue manager hardware unit responsible for managing queue operations; and wherein the secure zone the computing system includes a hardware unit responsible for scheduling and load balancing;
or
b) the RX queue is a software queue included in a shared memory accessible from the secure zone and a non-secure zone of the computing system; wherein the TX queue is a software queue included in a shared memory accessible from the secure zone and a non-secure zone of the computing system; wherein a hypervisor manages access permissions to the shared memory; and wherein a software scheduler included in the secure zone performs scheduling and load balancing.

7. The method of any preceding claim, wherein:
a) the RX queue is a circular queue; and wherein the TX queue is a circular queue;
and/or
b) the notification that indicates that the response to the SMC call is in the TX queue comprises:
an inter-processor interrupt; or
a shared memory flag.

8. An apparatus for scheduling trusted resource in a secure zone of a computing system, the apparatus comprising:
a hardware receive (RX) queue;
a hardware transmit (TX) queue;
a hardware queue manager; and
a hardware scheduler;
the apparatus configured to:
receive, by the queue manager and from an application in a non-secure zone of the computing system, a Secure Monitor Call (SMC) requesting use of one or more trusted resources in the secure zone;
enqueue, by the queue manager, the SMC as an entry in a RX queue;
dequeue the entry;
evaluate, by the scheduler, SMC call information included in the dequeued entry;
based on the evaluated SMC call information included in the enqueued entry, schedule, by the scheduler, the SMC call for execution using the one or more trusted resources in the secure zone;
based on the execution of the SMC call, receive, by the scheduler, a response to the scheduled SMC call;
enqueue, by the queue manager, the response to the SMC call in the TX queue; and
send a notification, from the queue manager and to the application, that indicates that the response to the SMC call is in the TX queue.

9. The apparatus of claim 8, the apparatus further configured to:
receive additional SMCs from applications in the non-secure zone;
enqueue, by the queue manager, the additional SMCs as additional entries in the RX queue;
dequeue the additional entries;
evaluate, by the scheduler, SMC call information included in the additional dequeued entries; and
schedule the execution of the additional SMCs.

10. The apparatus of claim 9, wherein:
a) the scheduler is configured to schedule the execution of the additional SMCs:
based on priority levels included in the SMC call information;
using First-Come, First-Served (FCFS) scheduling;
using Round-Robin scheduling;
using Weighted Fair Queuing (WFQ) scheduling; or
any combination thereof;
and/or
b) the scheduler is configured to:
load balance execution of the additional SMCs across the trusted resource in the secure zone; and
wherein the scheduler is configured to load balance the execution of the additional SMCs using:
least-connections load balancing;
round-robin load balancing;
weighted load balancing; or
any combination thereof.

11. The apparatus of claim 9 or 10, wherein the queue manager is configured to:
send the notification, to the application, that indicates that the response to the SMC call is in the TX queue using an inter-processor interrupt or a shared memory flag.

12. The apparatus of any one of claims 9 to 11, wherein the scheduler included in secure zone of the computing system.

13. An apparatus for scheduling trusted resources in a secure zone of a computing system, the apparatus comprising:
a shared memory, the shared memory accessible from the secure zone and a non-secure zone of the computing system;
a first processor in the non-secure zone;
a second processor in the secure zone;
a first memory in the non-secure zone comprising instructions executable by the first processor to:
receive, from an application in a non-secure zone of the computing system, a Secure Monitor Call (SMC) requesting use of one or more trusted resources in the secure zone;
enqueue the SMC as an entry in a receive (RX) queue included in the shared memory;
a second memory in the secure zone comprising instructions executable by the second processor to:
dequeue the entry from the RX queue;
evaluate SMC call information included in the dequeued entry;
based on the evaluated SMC call information included in the enqueued entry, schedule the SMC call for execution using the one or more trusted resources in the secure zone;
based on the execution of the SMC call, receive, by the scheduler, a response to the scheduled SMC call;
enqueue the response to the SMC call in a transmit (TX) queue included in the shared memory; and
the instructions in the first memory executable by the first processor to:
send a notification, to the application, that indicates that the response to the SMC call is in the TX queue.

14. The apparatus of claim 13, wherein the instructions in the first memory are executable by the first processor to:
receive additional SMCs from applications in the non-secure zone;
enqueue the additional SMCs as additional entries in the RX queue;
wherein the instructions in the second memory are executable by the second processor to:
dequeue the additional entries, by the scheduler;
evaluate SMC call information included in the additional dequeued entries; and
schedule the execution of the additional SMCs.

15. The apparatus of claim 14, wherein:
a) the instructions to schedule the execution of the additional SMCs are executable to schedule the execution of the additional SMCs:
based on priority levels included in the SMC call information;
using First-Come, First-Served (FCFS) scheduling;
using Round-Robin scheduling;
using Weighted Fair Queuing (WFQ) scheduling; or
any combination thereof;
and/or
b) the instructions to schedule the execution of the additional SMCs are executable to load balance execution of the additional SMCs across the trusted resources in the secure zone using:
least-connections load balancing;
round-robin load balancing;
weighted load balancing; or
any combination thereof.
